# FASCICULE DE BREVET EUROPEEN

(11) **EP 3 803 056 B1**
(45) Date de publication et mention de la délivrance du brevet: **24.09.2025**
(21) Numéro de dépôt: 19737815.1
(22) Date de dépôt: 23.05.2019
(51) Int. Cl.: F01D 5/14, F01D 5/28

(54) **TISSU COMPRENANT DES FIBRES D'ARAMIDE POUR PROTÉGER UNE AUBE CONTRE LES IMPACTS**
GEWEBE AUS ARAMIDFASERN ZUM SCHUTZ EINER SCHAUFEL GEGEN STÖSSE
FABRIC COMPRISING ARAMID FIBRES FOR PROTECTING A BLADE AGAINST IMPACTS

(30) Priorité: 24.05.2018 FR 1854364
(43) Date de publication de la demande: 14.04.2021
(73) Titulaire: SAFRAN AIRCRAFT ENGINES, 75015 Paris (FR)
(72) Inventeur: DE GAILLARD, Thomas, Alain, 77550 MOISSY-CRAMAYEL (FR); LAGUERRE, Audrey, Myriam, 77550 MOISSY-CRAMAYEL (FR); NOTARIANNI, Gilles, Pierre-Marie, 77550 MOISSY-CRAMAYEL (FR)
(74) Mandataire: Regimbeau
(86) Numéro de dépôt international: PCT/FR2019/051193
(87) Numéro de publication internationale: WO 2019/224496

(56) Documents cités:
- EP-A1- 3 045 260
- WO-A1-2015/047755
- US-A1- 2014 112 796
- US-A1- 2016 201 480
- US-A1- 2016 201 607
- US-A1- 2018 010 614

## Description

### DOMAINE DE L'INVENTION

L'invention concerne de manière générale le domaine des turbomachines, et plus particulièrement celui des aubes de soufflantes de ces turbomachines et de leur procédé de fabrication.

L'invention s'applique plus particulièrement aux aubes de soufflante en matériau composite ou métallique, et dont le bord d'attaque comporte un bouclier structurel métallique.

### ARRIERE-PLAN TECHNOLOGIQUE

Une aube de soufflante (ou fan en anglais) d'une turbomachine comporte une surface aérodynamique, un bord d'attaque, un bord de fuite et des parois latérales intrados et extrados qui relient le bord d'attaque au bord de fuite.

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

Lors de la certification et de la vie d'un moteur, les aubes de soufflante sont soumises à des ingestions d'oiseau. Le comportement mécanique des aubes de soufflante est donc optimisé pendant la phase de conception des aubes pour respecter les règles de certification.

Il est connu, comme mentionné dans les documents US 2018/0010614 A1, US 2016/0201480 A1 et US 2016/0201607 A1, de réaliser une aube de soufflante de turbomachine en matériau composite et dont le bord d'attaque est équipé d'un bouclier structurel métallique Dans US 2018/0010614 A1 un morceau de tissu comportant des fibres d'aramide est rapporté et fixé sur une paroi de l'aube de sorte que le morceau de tissu s'étende dans le prolongement du bouclier structurel.

Dans US 2016/0201480 A1 un morceau de tissu comportant des fibres d'aramide est rapporté et fixé sur la paroi intrados de l'aube de sorte que le morceau de tissu soit éloigné du prolongement d'une ailette intrados du bouclier.

Il est connu d'équiper les aubes de soufflante d'une turbomachine, réalisées en matériaux composites d'un bouclier structurel métallique s'étendant sur toute la hauteur de la pale de l'aube et au-delà de son bord d'attaque, comme mentionné dans les documents EP 3045260 A1, US 2016/0201480 A1 et EP1908919, et comprenant des ailettes configurées pour venir en appui contre l'intrados et l'extrados de l'aube. Un tel bouclier permet en effet de protéger l'aube en matériau composite lors d'un impact d'un corps étranger sur la soufflante, tel que par exemple un oiseau, de la grêle ou encore des cailloux. En particulier, le bouclier métallique protège le bord d'attaque de l'aube en évitant des risques de délaminage, de rupture de fibre ou encore d'endommagement par décohésion fibre/matrice. Ce bouclier participe en outre à la rigidité de l'aube qui est nécessaire notamment pour des aspects fréquentiels et de déflexion à l'impact ainsi qu'à l'aérodynamisme de l'aube, en permettant un amincissement du bord d'attaque.

Le bouclier épouse alors la forme du bord d'attaque de la pale de l'aube et s'étend en direction du bord de fuite de manière à épouser le profil de l'intrados et de l'extrados de l'aube, entre le pied et le sommet de l'aube. De façon connue, le bouclier peut être une pièce métallique, notamment en titane, et est généralement réalisé par fraisage à partir par exemple d'un bloc de matière.

Lors d'un impact avec un objet donné, notamment avec un oiseau, l'objet glisse notablement sur l'intrados. De manière conventionnelle, la longueur des ailettes du bouclier, et en particulier de l'ailette intrados, est donc ajustée pour que lesdites ailettes couvrent bien la partie de l'aube susceptible d'être impactée par des objets (en tenant compte de la taille, du poids, etc. des objets susceptibles d'impacter une aube de soufflante). Cependant, sur les turbomachines dont la soufflante présente une vitesse de rotation et ayant un nombre d'aubes qui sont réduits, l'impact de l'objet a lieu sur une longueur de corde plus importante que dans le cas des soufflantes dont la vitesse de rotation et le nombre d'aubes sont élevés. En particulier, la longueur axiale de l'aube de soufflante devant être protégée des impacts augmente lorsque la vitesse de rotation de la soufflante et le nombre d'aubes de soufflante diminue.

Afin de protéger l'aube en matériau composite, il serait donc nécessaire d'augmenter fortement la longueur axiale de l'ailette intrados du bouclier (jusqu'à la moitié de la corde de l'aube). Or, une telle augmentation n'est pas souhaitable ou pas envisageable pour des questions de masse, de complexité de fabrication, etc.

### RESUME DE L'INVENTION

Un objectif de l'invention est donc de proposer une solution permettant de protéger une aube pour une partie tournante, et plus particulièrement pour une soufflante, réalisée dans un matériau composite en cas d'ingestion, sans pénaliser la masse de la partie tournante ou son aérodynamisme.

Pour cela, l'invention propose une aube de partie tournante d'une turbomachine, notamment d'une soufflante pour une turbomachine, comprenant :
- un bord d'attaque et une paroi intrados,
- un bouclier structurel, ledit bouclier étant rapporté et fixé sur le bord d'attaque de l'aube et comportant une ailette intrados fixée sur la paroi intrados,
- un morceau de tissu comportant des fibres d'aramide, ledit morceau de tissu étant rapporté et fixé sur la paroi intrados de l'aube de sorte que le morceau de tissu s'étende dans le prolongement de l'ailette intrados du bouclier sans recouvrir ladite ailette intrados, et
- un film de protection contre l'érosion, ledit film de protection contre l'érosion étant rapporté et fixé sur la paroi intrados de l'aube de sorte à s'étendre dans le prolongement du morceau de tissu sans recouvrir ledit morceau de tissu.

Certaines caractéristiques préférées mais non limitatives de l'aube décrite ci-dessus sont les suivantes, prises individuellement ou en combinaison :
- le morceau de tissu comprend un tissu bidimensionnel
- le morceau de tissu est partiellement recouvert par l'ailette intrados du bouclier
- le morceau de tissu est à champ de l'ailette intrados du bouclier, sans recouvrement par le bouclier
- une surface aérodynamique de l'aube présente une direction principale d'extension, définissant un axe longitudinal de l'aube qui est sensiblement radial à un axe de révolution de la partie tournante, et une hauteur correspondant à une distance entre une limite inférieure de la surface aérodynamique et une tête de l'aube, le morceau de tissu recouvrant la surface aérodynamique sur une partie seulement de ladite hauteur
- la surface aérodynamique comporte une portion de surface au niveau de la paroi intrados qui est dépourvue de morceau de tissu, ladite portion de surface étant adjacente à la limite inférieure de la surface aérodynamique
- le morceau de tissu recouvre au plus 70% de la hauteur de l'aube
- dans les zones de l'aube qui comportent un morceau de tissu, une longueur axiale de l'ensemble formé par le bouclier et le morceau de tissu est comprise entre 20% et 50% d'une longueur axiale de l'aube, où la longueur axiale de l'ensemble et la longueur axiale de l'aube correspondent à une longueur curviligne suivant une direction parallèle à l'axe de révolution de la partie tournante
- l'aube est réalisée dans un matériau composite comprenant une renfort fibreux densifié par une matrice polymère, le renfort fibreux peut être formé à partir d'une préforme fibreuse obtenue par tissage tridimensionnel avec épaisseur évolutive.

Selon un deuxième aspect, l'invention propose également une soufflante pour une turbomachine comprenant moins une aube comme décrite ci-dessus.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

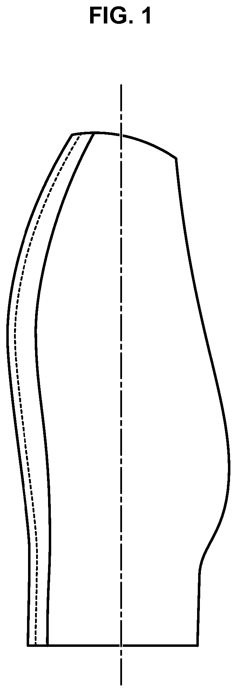

La figure 1 est une vue de côté d'une aube comportant un bouclier structurel conforme à l'art antérieur.
La figure 2 est une vue de côté d'un exemple d'aube comportant un bouclier structurel conforme à l'invention, dans le cas où le morceau de tissu et l'ailette intrados du bouclier sont à champ.
La figure 3 est une vue de côté d'un exemple d'aube comportant un bouclier structurel conforme à l'invention, dans le cas où le morceau de tissu est recouvert partiellement par l'ailette intrados du bouclier.

### DESCRIPTION DETAILLEE D'UN MODE DE REALISATION

Dans ce qui suit, l'invention va plus particulièrement être décrite dans le cas d'une aube de soufflante. On comprendra toutefois que l'invention s'applique mutatis mutandis aux aubes de toute partie tournante de la turbomachine.

De manière connue en soit, une aube 1 de soufflante conforme à l'invention comporte une surface aérodynamique 2 présentant une direction principale s'étendant selon un axe longitudinal X entre un pied d'aube 1 et une tête d'aube 1. L'aube 1 présente un bord d'attaque 4, un bord de fuite 5, une paroi intrados 6 et une paroi extrados 7. Le bord d'attaque 4 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite 5 quant à lui correspond à la partie postérieure du profil aérodynamique, où se rejoignent les écoulements intrados et extrados.

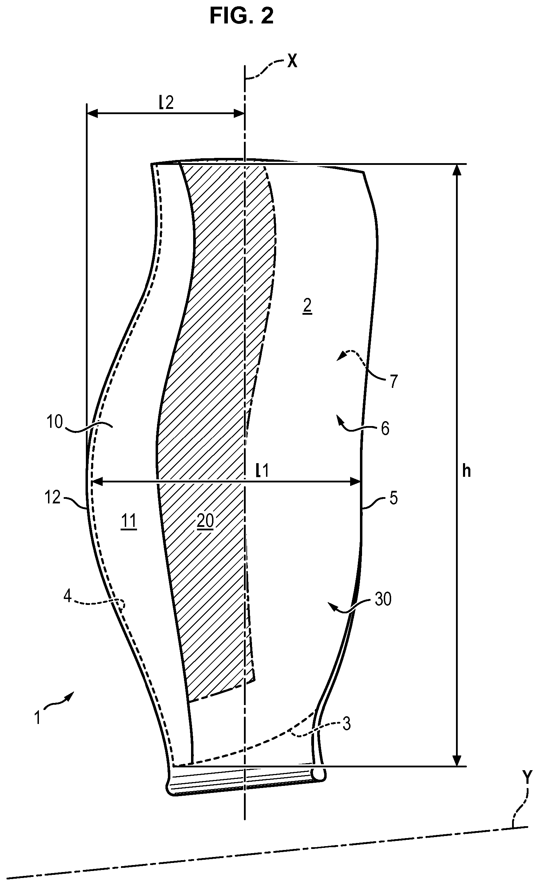

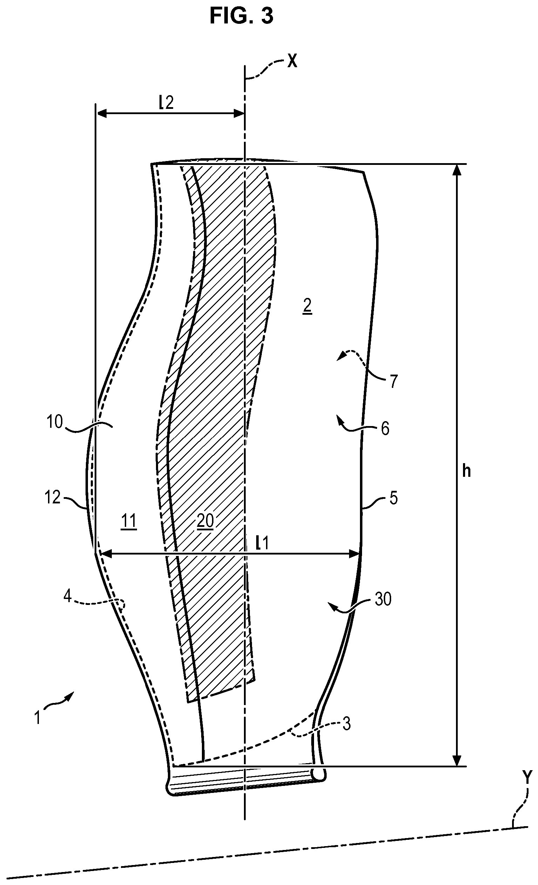

Seule la paroi intrados 6 est représentée sur les figures 2 et 3.

La surface aérodynamique 2 de l'aube 1 présente une direction principale d'extension, définissant l'axe longitudinal X de l'aube 1 qui est sensiblement radial à un axe de révolution Y de la soufflante. La surface aérodynamique 2 présente en outre une hauteur h correspondant à une distance entre une limite inférieure 3 de la surface aérodynamique 2 et une tête de l'aube 1, au niveau de l'intersection du bord d'attaque 4 et de la limite inférieure 3.

L'aube 1 peut être réalisée dans un matériau composite comprenant une renfort fibreux densifié par une matrice polymère.

Le renfort fibreux peut être formé à partir d'une préforme fibreuse obtenue par tissage tridimensionnel avec épaisseur évolutive. Il peut notamment comprendre des fibres en carbone, en verre, aramide et/ou céramique. La matrice quant à elle est typiquement une matrice polymère, par exemple époxyde, bismaléimide ou polyimide.

L'aube 1 est alors formée par moulage au moyen d'un procédé d'injection sous vide de résine du type RTM (pour « Resin Transfer Moulding), ou encore VARRTM (pour Vacuum Resin Transfer Molding).

L'aube 1 comprend en outre un bouclier 10 structurel qui est rapporté et fixé sur son bord d'attaque 4.

Le bouclier 10 est une pièce monobloc comprenant une section sensiblement en forme de V présentant une base configurée pour s'étendre dans le prolongement du bord d'attaque 4 de l'aube 1, ainsi qu'une ailette intrados 11 et une ailette extrados configurées pour épouser respectivement les parois intrados 6 et extrados 7 de l'aube 1. Les ailettes peuvent présenter un profil effilé ou aminci en direction du bord de fuite 5 de l'aube 1.

Le bouclier 10 s'étend sur toute la hauteur de la surface aérodynamique 2 de l'aube 1. Conventionnellement, lorsque l'aube 1 est intégrée dans une soufflante, la portion radialement interne de la veine d'écoulement est délimitée par une plateforme inter-aubes (représentée en traits hachurées sur les figures 2 et 3). La surface aérodynamique 2 de l'aube 1 correspond alors à la surface de l'aube 1 s'étendant entre la tête de l'aube 1 et les plateformes inter-aubes placées de part et d'autre de son pied. Par ailleurs, la limite inférieure 3 de la surface aérodynamique 2 de l'aube 1 correspond à l'intersection entre l'aube 1 et la plateforme inter-aubes.

Comme illustré sur la figure 2, le bouclier 10 épouse la forme du bord d'attaque 4 de la pale de l'aube 1 qu'il prolonge pour former un nouveau bord d'attaque 12, dit bord d'attaque 12 du bouclier 10. Le bouclier 10 forme donc le profil aérodynamique de l'aube 1 au niveau du bord d'attaque 4.

Le bouclier 10 de l'aube 1 est généralement métallique, par exemple en titane, afin de conférer une grande capacité d'absorption de l'énergie due aux éventuels chocs.

Le bouclier 10 et l'aube 1 sont réalisés séparément. Le bouclier 10 est ensuite rapporté sur le bord d'attaque 4 de l'aube 1 et fixé sur celle-ci par collage, par exemple au moyen d'une colle cyano-acrylique ou époxy. Pour cela, le bouclier 10 présente un profil interne adapté pour épouser la forme arrondie du bord d'attaque 4 de l'aube 1, avec ou sans contact avec ledit bord d'attaque 4. Le cas échéant, un soyage des parois intrados 6 et extrados 7 de l'aube 1 peut être effectué afin de faciliter l'assemblage du bouclier 10.

Afin de protéger l'aube 1 de soufflante sans en pénaliser sa masse ni son aérodynamisme, un morceau de tissu 20 comportant des fibres d'aramide est rapporté et fixé sur sa paroi intrados 6, de sorte que le morceau de tissu 20 s'étende dans le prolongement de l'ailette intrados 11 du bouclier 10 sans recouvrir ladite ailette. De la sorte, lors d'un impact avec un objet, celui-ci glisse sur le morceau de tissu 20 sans endommager la paroi de l'aube 1 sur laquelle est fixé le morceau de tissu 20.

De préférence, le morceau de tissu 20 est fixé sur la paroi intrados 6 uniquement. La Demanderesse s'est en effet aperçue du fait que la paroi extrados 7 était moins sujette à l'impact, de sorte que la protection conférée par le bouclier 10 suffisait pour éviter son endommagement en cas d'impact.

Le morceau de tissu 20 comprend des fibres d'aramide enrobées de résine polymère. De la sorte, le morceau de tissu 20 permet d'améliorer le comportement mécanique de l'aube 1 en cas d'impact. En effet, l'énergie d'absorption d'une part des fibres d'aramide et d'autre part de leur interface avec la résine polymère est plus importante que celle du matériau composite de l'aube 1. Par ailleurs, le morceau de tissu 20 permet de propager l'endommagement de la paroi de l'aube 1 sur une plus grande surface que la surface d'impact.

Le morceau de tissu 20 agit donc comme une protection supplémentaire pour le matériau composite de l'aube 1, en complément voire en remplacement local et partiel du bouclier 10, sans pour autant pénaliser la masse de l'aube 1. La masse du morceau de tissu 20 est en effet très faible compte-tenu de l'utilisation de fibres d'aramide. La masse de l'aube 1 ainsi obtenue est donc nettement plus faible que si le bouclier 10 avait été prolongé de manière à couvrir la même surface que celle occupée par le morceau de tissu 20. Par ailleurs, l'utilisation d'un tel morceau de tissu 20 n'a pas d'impact sur le comportement de l'aube 1 en fonctionnement ni sa forme aérodynamique et ne nécessite donc pas de la redimensionner.

Avantageusement, les fibres d'aramide confèrent en outre une protection contre l'érosion. Or, conventionnellement, une telle protection est obtenue par l'application d'un film 30 anti-érosion sur la totalité de la surface de l'aube 1. Typiquement, le film 30 anti-érosion peut comprendre du polyuréthane.

Par conséquent, selon l'invention, les zones de l'aube 1 sur lesquelles est appliqué le morceau de tissu 20 sont dépourvues de film 30 anti-érosion. Le film 30 anti-érosion et le morceau de tissu 20 sont alors à champ, c'est-à-dire qu'ils s'étendent dans le prolongement l'un de l'autre sans recouvrement mais sans laisser d'espace dépourvu à la fois de film 30 anti-érosion et de morceau de tissu 20. Ainsi, l'intégralité de la surface de l'aube 1 est recouverte soit par le film 30 anti-érosion, soit par le morceau de tissu 20.

Le morceau de tissu 20 peut notamment comprendre un tissu bidimensionnel. Les torons du morceau tissu bidimensionnel ont alors un faible titre (c'est-à-dire un nombre de fibres dans chaque toron par exemple égal à 8K, correspondant à 8000 fibres par toron, et si possible inférieur à cette valeur en étant le cas échéant à la valeur de 3K pour 3000 fibres par toron), ce qui permet de limiter les ondulations en surface du morceau de tissu 20. Avantageusement, la zone de l'aube 1 sur laquelle est appliqué le morceau de tissu 20 en fibres d'aramides comporte alors moins d'ondulations que le reste de l'aube 1 qui est dépourvu de tissu en fibres d'aramide avant application du film 30 anti-érosion.

Les fibres d'aramide peuvent notamment comprendre des fibres de poly(p-phénylènetéréphtalamide) (PPD-T - connu sous la marque Kevlar).

Le morceau de tissu 20 peut être appliqué soit de manière à être à champ de l'ailette intrados 11 du bouclier 10 (figure 2), sans recouvrement par le bouclier 10, soit de manière à être partiellement recouvert par l'ailette intrados 11 du bouclier 10 (figure 3).

Pour cela, le morceau de tissu 20 peut être appliqué contre la préforme fibreuse destinée à former l'aube 1 dans le moule d'injection, avant injection de la matrice. En variante, le morceau de tissu 20 peut être fixé sur l'aube 1 après injection de la matrice, par exemple par collage.

Dans une forme de réalisation, le morceau de tissu 20 recouvre la surface aérodynamique 2 sur une partie seulement de sa hauteur h. De préférence, la surface aérodynamique 2 comporte une portion de surface au niveau de la paroi intrados 6 qui est dépourvue de morceau de tissu 20. Par exemple, dans le cas d'une aube 1 de soufflante présentant une vitesse de rotation réduite, la portion de surface dépourvue de morceau de tissu 20 est adjacente à la limite inférieure 3 de la surface aérodynamique 2. En effet, la Demanderesse s'est aperçue du fait que les impacts d'objets, et notamment d'oiseaux, ne dégradaient pas l'aube 1 au-delà du bouclier 10 dans cette portion de l'aube 1.

Typiquement, le morceau de tissu 20 recouvre au plus 70% de la hauteur de la surface aérodynamique 2, sans recouvrir la portion inférieure de la surface aérodynamique 2 (comme illustré à titre d'exemple sur les figures 2 et 3).

La forme et les dimensions du morceau de tissu 20 peuvent être déterminées en fonction des paramètres suivants, pris individuellement ou en combinaison :
- la vitesse de rotation de la soufflante,
- le nombre d'aubes 1 de la soufflante
- l'espacement inter-aubes 1,
- la forme tridimensionnelle de l'aube 1.

En particulier,
- plus la vitesse de rotation de la soufflante est faible,
- plus le nombre d'aubes 1 de soufflante est faible, et/ou
- plus l'espacement inter-aubes 1 est important,
plus la surface de l'ensemble formé par l'ailette intrados 11 et le morceau de tissu 20 doit être importante.

De préférence, la forme et les dimensions du morceau de tissu 20 sont déterminées en fonction de ces quatre paramètres pris en combinaison.

Par exemple, pour une aube 1 de soufflante présentant une vitesse de rotation et un nombre d'aubes 1 réduits, en tout point de la hauteur h de la surface aérodynamique 2 pourvue d'un morceau de tissu 20, la longueur axiale *l2* de l'ensemble formé par l'ailette intrados 11 et le morceau de tissu 20 est comprise entre 20% et 50% de la longueur axiale *l1* de l'aube 1.

Par longueur axiale *l2* de l'ensemble formé par l'ailette intrados 11 et le morceau de tissu 20, on comprendra ici la longueur curviligne dudit ensemble entre le bord d'attaque 4 du bouclier 10 et un bord aval 21 du morceau de tissu 20, suivant une direction parallèle à l'axe de révolution Y de la soufflante. Le bord aval 21 du morceau de tissu 20 correspond ici au bord du morceau de tissu 20 qui est le plus proche du bord de fuite 5 de l'aube 1, par opposition au bord amont 22 qui est le plus proche du bord d'attaque 4 de l'aube 1.

Par longueur axiale *l1* de l'aube 1, on comprendra ici la longueur curviligne de la paroi intrados 6 entre le bord d'attaque 4 et le bord de fuite 5 de l'aube 1, suivant une direction parallèle à l'axe de rotation de la soufflante.

Bien entendu, la longueur axiale *l2* de l'ensemble formé du bouclier 10 et du morceau de tissu 20 et la longueur axiale *l1* de l'aube 1 varient entre la limite inférieure 3 de la surface aérodynamique 2 de l'aube 1 et la tête de l'aube 1.

La dimension et la forme du morceau de tissu 20 et de l'ailette intrados 11 peuvent également être optimisées. En particulier, le bouclier 10 représente une masse non négligeable en comparaison avec le morceau de tissu 20, mais confère à l'aube 1 de soufflante une rigidité nécessaire notamment pour les aspects fréquentiels et de déflexion à l'impact. Il est donc nécessaire de conserver l'ailette intrados 11, malgré la fixation du morceau de tissu 20. Sa dimension et sa forme peuvent toutefois être adaptés afin de réduire la masse de l'aube 1 de soufflante.

Enfin, le morceau de tissu 20 peut s'étendre de manière continue le long de la surface aérodynamique 2. En variante, le morceau de tissu 20 peut être discontinu et comprendre plusieurs portions de morceau de tissu 20 disjoints.

## Revendications

1. Aube (1) d'une partie tournante d'une turbomachine, notamment d'une soufflante pour une turbomachine, comprenant :
- un bord d'attaque (4) et une paroi intrados (6), et
- un bouclier (10) structurel, ledit bouclier (10) étant rapporté et fixé sur le bord d'attaque (4) de l'aube (1) et comportant une ailette intrados (11) fixée sur la paroi intrados (6), un morceau de tissu (20) comportant des fibres d'aramide, ledit morceau de tissu (20) étant rapporté et fixé sur la paroi intrados (6) de l'aube (1) de sorte que le morceau de tissu (20) s'étende dans le prolongement de l'ailette intrados (11) du bouclier (10) sans recouvrir ladite ailette intrados (11), et
- un film de protection contre l'érosion (30), ledit film de protection contre l'érosion (30) étant rapporté et fixé sur la paroi intrados (6) de l'aube (1) de sorte à s'étendre dans le prolongement du morceau de tissu (20) sans recouvrir ledit morceau de tissu (20).

2. Aube (1) selon la revendication 1, dans laquelle le morceau de tissu (20) comprend un tissu bidimensionnel.

3. Aube (1) selon l'une des revendications 1 ou 2, dans laquelle le morceau de tissu (20) est partiellement recouvert par l'ailette intrados (11) du bouclier (10).

4. Aube (1) selon l'une des revendications 1 ou 2, dans laquelle le morceau de tissu (20) est à champ de l'ailette intrados (11) du bouclier (10), sans recouvrement par le bouclier (10).

5. Aube (1) selon l'une des revendications 1 à 4, dans laquelle une surface aérodynamique (2) de l'aube (1) présente une direction principale d'extension, définissant un axe longitudinal (X) de l'aube (1) qui est sensiblement radial à un axe de révolution (Y) de la partie tournante, et une hauteur (h) correspondant à une distance entre une limite inférieure (3) de la surface aérodynamique (2) et une tête de l'aube (1), le morceau de tissu (20) recouvrant la surface aérodynamique (2) sur une partie seulement de ladite hauteur (h).

6. Aube (1) selon la revendication 5, dans laquelle la surface aérodynamique (2) comporte une portion de surface au niveau de la paroi intrados (6) qui est dépourvue de morceau de tissu (20), ladite portion de surface étant adjacente à la limite inférieure (3) de la surface aérodynamique (2).

7. Aube (1) selon l'une des revendications 5 ou 6, dans laquelle le morceau de tissu (20) recouvre au plus 70% de la hauteur (h) de l'aube (1).

8. Aube (1) selon l'une des revendications 1 à 7, dans laquelle, dans les zones de l'aube (1) qui comportent un morceau de tissu (20), une longueur axiale (12) de l'ensemble formé par le bouclier (10) et le morceau de tissu (20) est comprise entre 20% et 50% d'une longueur axiale (11) de l'aube (1), où la longueur axiale (12) de l'ensemble et la longueur axiale (11) de l'aube (1) correspondent à une longueur curviligne suivant une direction parallèle à l'axe de révolution (Y) de la partie tournante.

9. Aube (1) selon l'une des revendications 1 à 8, dans lequel le film de protection comprend du polyuréthane.

10. Aube (1) selon l'une des revendications 1 à 9, ladite aube (1) étant réalisée dans un matériau composite comprenant une renfort fibreux densifié par une matrice polymère, le renfort fibreux peut être formé à partir d'une préforme fibreuse obtenue par tissage tridimensionnel avec épaisseur évolutive.

11. Soufflante pour une turbomachine, **caractérisée en ce qu'**elle comprend au moins une aube (1) selon l'une des revendications 1 à 10.

## Patentansprüche

1. Schaufel (1) eines rotierenden Teils einer Turbomaschine, insbesondere eines Gebläses für eine Turbomaschine, umfassend:
- eine Vorderkante (4) und eine Unterseite (6), und
- einen strukturellen Schild (10), wobei der Schild (10) an der Vorderkante (4) der Schaufel (1) angebracht und befestigt ist und einen an der Unterseite (6) befestigten Unterseitenflügel (11) aufweist, ein Gewebestück (20) Aramidfasern aufweist, wobei das Gewebestück (20) an der Unterseite (6) der Schaufel (1) derart angebracht und befestigt ist, dass sich das Gewebestück (20) in der Verlängerung des Unterseitenflügels (11) des Schildes (10) erstreckt, ohne den Unterseitenflügel (11) zu bedecken, und
- eine Erosionsschutzfolie (30), wobei die Erosionsschutzfolie (30) an der Unterseite (6) der Schaufel (1) derart angebracht und befestigt ist, dass sie sich in der Verlängerung des Gewebestücks (20) erstreckt, ohne das Gewebestück (20) zu bedecken.

2. Schaufel (1) nach Anspruch 1, wobei das Gewebestück (20) ein zweidimensionales Gewebe umfasst.

3. Schaufel (1) nach einem der Ansprüche 1 oder 2, wobei das Gewebestück (20) teilweise von dem Unterseitenflügel (11) des Schildes (10) bedeckt ist.

4. Schaufel (1) nach einem der Ansprüche 1 oder 2, wobei das Gewebestück (20) im Bereich des Unterseitenflügels (11) des Schildes (10) liegt, ohne von dem Schild (10) bedeckt zu sein.

5. Schaufel (1) nach einem der Ansprüche 1 bis 4, wobei eine aerodynamische Fläche (2) der Schaufel (1) eine Haupterstreckungsrichtung aufweist, die eine Längsachse (X) der Schaufel (1) definiert, die im Wesentlichen radial zu einer Drehachse (Y) des rotierenden Teils verläuft, und eine Höhe (h), die einem Abstand zwischen einer Untergrenze (3) der aerodynamischen Fläche (2) und einem Kopf der Schaufel (1) entspricht, wobei das Gewebestück (20) die aerodynamische Fläche (2) nur über einen Teil der Höhe (h) bedeckt.

6. Schaufel (1) nach Anspruch 5, wobei die aerodynamische Fläche (2) einen Flächenabschnitt im Bereich der Unterseite (6) aufweist, der kein Gewebestück (20) aufweist, wobei der Flächenabschnitt an die Untergrenze (3) der aerodynamischen Fläche (2) angrenzt.

7. Schaufel (1) nach einem der Ansprüche 5 oder 6, wobei das Gewebestück (20) höchstens 70% der Höhe (h) der Schaufel (1) bedeckt.

8. Schaufel (1) nach einem der Ansprüche 1 bis 7, wobei in den Bereichen der Schaufel (1), die ein Gewebestück (20) aufweisen, eine axiale Länge (12) der aus dem Schild (10) und dem Gewebestück (20) gebildeten Anordnung zwischen 20% und 50% einer axialen Länge (11) der Schaufel (1) liegt, wobei die axiale Länge (12) der Anordnung und die axiale Länge (11) der Schaufel (1) einer gekrümmten Länge gemäß einer Richtung parallel zur Drehachse (Y) des rotierenden Teils entsprechen.

9. Schaufel nach einem der Ansprüche 1 bis 8, wobei die Schutzfolie Polyurethan umfasst.

10. Schaufel (1) nach einem der Ansprüche 1 bis 9, wobei die Schaufel (1) aus einem Verbundwerkstoff hergestellt ist, der eine durch eine Polymermatrix verdichtete Faserverstärkung umfasst, wobei die Faserverstärkung aus einer faserigen Vorform hergestellt sein kann, die durch dreidimensionales Weben mit fortschreitender Dicke erhalten wird.

11. Gebläse für eine Turbomaschine, **dadurch gekennzeichnet, dass** es mindestens eine Schaufel (1) nach einem der Ansprüche 1 bis 10 umfasst.

## Claims

1. A blade (1) for a rotating part of a turbomachine, in particular of a fan for a turbomachine, comprising:
- a leading edge (4) and a suction wall (6), and
- a structural shield (10), said shield (10) being attached and fixed to the leading edge (4) of the blade (1) and comprising a suction fin (11) fixed to the suction wall (6), a piece of fabric (20) comprising aramid fibres, said piece of fabric (20) being attached and fixed to the suction wall (6) of the blade (1) so that the piece of fabric (20) extends in the extension of the suction fin (11) of the shield (10) without covering said suction fin (11), and
- an erosion protection film (30), said erosion protection film (30) being attached and fixed to the suction wall (6) of the blade (1) so as to extend in the extension of the piece of fabric (20) without covering said piece of fabric (20).

2. The blade (1) as claimed in claim 1, wherein the piece of fabric (20) comprises a two-dimensional fabric.

3. The blade (1) as claimed in one of claims 1 or 2, wherein the piece of fabric (20) is partially covered by the suction fin (11) of the shield (10).

4. The blade (1) as claimed in one of claims 1 or 2, wherein the piece of fabric (20) adjoins the suction surface (11) of the shield (10), without overlapping by the shield (10).

5. The blade (1) as claimed in one of claims 1 to 4, wherein an aerodynamic surface (2) of the blade (1) has a main direction of extension, defining a longitudinal axis (X) of the blade (1) which is substantially radial to an axis of revolution (Y) of the rotating part, and a height (h) corresponding to a distance between a lower limit (3) of the aerodynamic surface (2) and a tip of the blade (1), the piece of fabric (20) covering the aerodynamic surface (2) over only a part of said height (h).

6. The blade (1) as claimed in claim 5, wherein the aerodynamic surface (2) has a surface portion at the suction wall (6) which is free of piece of fabric (20), said surface portion being adjacent to the lower limit (3) of the aerodynamic surface (2).

7. The blade (1) as claimed in one of claims 5 or 6, wherein the piece of fabric (20) covers not more than 70% of the height (h) of the blade (1).

8. The blade (1) as claimed in one of claims 1 to 7, wherein, in the areas of the blade (1) which comprise a piece of fabric (20), an axial length (*l2*) of the assembly formed by the shield (10) and the piece of fabric (20) is between 20% and 50% of an axial length (*l1*) of the blade (1), where the axial length (*l2*) of the assembly and the axial length (*l1*) of the blade (1) correspond to a curvilinear length in a direction parallel to the axis of revolution (Y) of the rotating part.

9. The blade (1) as claimed in one of claims 1 to 8, wherein the erosion protection film (30) comprises polyurethane.

10. The blade (1) as claimed in one of claims 1 to 9, said blade (1) being made of a composite material comprising a fibrous reinforcement densified by a polymer matrix, the fibrous reinforcement can be formed from a fibrous preform obtained by three-dimensional weaving with evolving thickness.

11. A fan for a turbomachine, **characterized in that** it comprises at least one blade (1) as claimed in one of claims 1 to 10.
